# EUROPÄISCHE PATENTSCHRIFT

(11) **EP 1 325 612 B1**
(45) Veröffentlichungstag und Bekanntmachung des Hinweises auf die Patenterteilung: **15.02.2006**
(21) Anmeldenummer: 01980171.1
(22) Anmeldetag: 18.09.2001
(51) Int. Cl.: H04M 3/42, H04M 3/493, H04L 29/08

(54) **KOMMUNIKATIONSANLAGE UND VERFAHREN ZUM BETRIEB EINES KOMMUNIKATIONSSYSTEMS**
COMMUNICATIONS INSTALLATION AND METHOD FOR OPERATING A COMMUNICATIONS SYSTEM
INSTALLATION DE COMMUNICATION ET PROCEDE POUR FAIRE FONCTIONNER UN SYSTEME DE COMMUNICATION

(30) Priorität: 19.09.2000 DE 10046340
(43) Veröffentlichungstag der Anmeldung: 09.07.2003
(73) Patentinhaber: SIEMENS AKTIENGESELLSCHAFT, 80333 München (DE)
(72) Erfinder: NEUHAUS, Ralf, 44534 Lünen (DE)
(86) Internationale Anmeldenummer: PCT/DE2001/003591
(87) Internationale Veröffentlichungsnummer: WO 2002/025915

(56) Entgegenhaltungen:
- WO-A-01/98867
- DE-A- 19 929 628

## Beschreibung

Bei bisher bekannten Kommunikationsendgeräten, die an eine Kommunikationsanlage angeschlossen sind, können lediglich Text- bzw. Grafikinformationen dargestellt werden, die durch die jeweilige Kommunikationsanlage vorgegeben und generiert werden. Bedienelemente und Anzeigeeinrichtungen der Kommunikationsendgeräte sind somit nicht für ein Abrufen bzw. eine Darstellung von beliebigen Text- bzw. Grafikinformationen nutzbar. Diese Einschränkungen behindern bei Kommmikationssystemen mit mehreren unterschiedlichen Kommunikationsanlagen eine Vereinheitlichung der verfügbaren Diensten. Eine mögliche Folge daraus sind Inkonsistenzen bei den in einem Kommunikationssystem verfügbaren Diensten.

Der vorliegenden Erfindung liegt die Aufgabe zugrunde, eine Kommunikationsanlage und ein Verfahren zum Betrieb eines Kommunikationssystems für eine Vereinheitlichung von in einem Kommunikationssystem verfügbaren Diensten anzugeben.

Diese Aufgabe wird erfindungsgemäß durch ein Verfahren mit den in Anspruch 1 angegebenen Merkmalen und durch eine Kommunikationsanlage mit den in Anspruch 7 angegebenen Merkmalen gelöst. Vorteilhafte Ausgestaltungen des erfindungsgemäßen Verfahrens sind den abhängigen Ansprüchen 2 bis 6 zu entnehmen.

Ein wesentlicher Aspekt der erfindungsgemäßen Kommunikationsanlage und des erfindungsgemäßen Verfahrens ist darin zu sehen, daß an Kommunikationsendgeräten Text- bzw. Grafikinformationen verfügbar gemacht werden, deren Inhalt für eine Kommunikationsanlage, an die das jeweilige Endgerät angeschlossen ist, nicht notwendigerweise bekannt ist. Für ein Endgerät angeforderte Text- bzw. Grafikinformationen sind nämlich entsprechend einem Protokoll für drahtlose Text- bzw. Grafikinformationsübertragung, beispielsweise dem bekannten Wireless-Access-Protocol (WAP), systemeinheitlich formatiert. Derart formatierte Text- bzw. Grafikinformationen können aufgrund der geringen Komplexität des Protokolls auf nahezu jedes beliebige kommunikationsanlagenindividuelle Datenübertragungsprotokoll umgewandelt werden. Damit ist auch eine weitgehende Vereinheitlichung von Diensten, deren Aktivierung oder Deaktivierung beispielsweise mittels eines Austausches von Text- bzw. Grafikinformationen erfolgt, innerhalb eines Kommunikationssystems für an die jeweiligen Kommunikationsanlagen angeschlossene Endgeräte möglich.

Entsprechend einer vorteilhaften Ausgestaltung des erfindungsgemäßen Verfahrens bilden Telefonbucheinträge Bestandteile von Text- bzw. Grafikinformationen. Die Telefonbucheinträge weisen zumindest Angaben über den Namen und die Rufnummer eines Teilnehmers auf. Auf diese Weise wird ein systemeinheitlicher Dienst zur Verfügung gestellt.

Die Erfindung wird nachfolgend an Ausführungsbeispielen anhand der Zeichnung näher erläutert. Es zeigt
- Figur 1: ein Kommunikationssystem mit einer Kommunikationsanlage und mehreren Endgeräten,
- Figur 2: ein weiteres Kommunikationssystem mit einer zusätzlichen separaten Programmsteuerungseinrichtung,
- Figur 3: ein Ablaufdiagramm für ein Verfahren zum Betrieb eines Kommunikationssystems und
- Figur 4: ein Ablaufdiagramm für eine Protokollumsetzung auf ein kommunikationsanlagenindividuelles Datenübertragungsprotokoll.

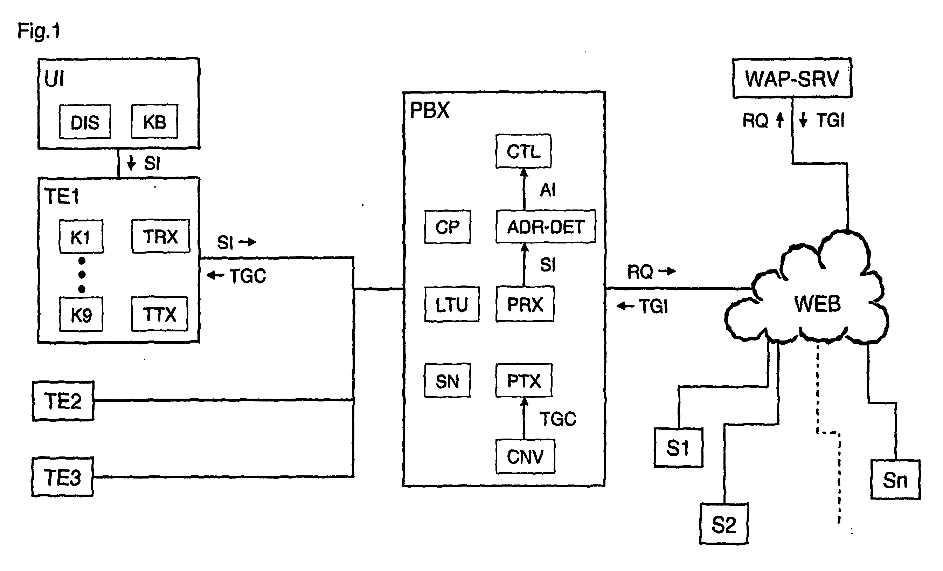

Das in Figur 1 dargestellte Kommunikationssystem weist eine Kommunikationsanlage PBX und mehrere an die Kommunikationsanlage PBX angeschlossene Endgeräten TE1, TE2, TE3 auf. Die Kommunikationsanlage PBX ist mit einem Koppelnetz SN, einer vermittlungstechnischen Steuerungseinheit CP und einer peripheren Anschlußeinrichtung LTU ausgestattet.

Bei einer durch einen Benutzer eingegebenen Anforderung einer Text- bzw. Grafikinformation TGI, die entsprechend einem Protokoll für drahtlose Text- bzw. Grafikinformationsübertragung formatiert ist, übermittelt eine Sendeeinrichtung TTX eines Endgerätes TE1 eine Selektionseingabe SI an eine Empfangseinrichtung PRX der Kommunikationsanlage PBX. Durch die Selektionseingabe SI wird die angeforderte Text- bzw. Grafikinformation TGI bezeichnet. Als Protokoll für drahtlose Text- bzw. Grafikinformationsübertragung wird das Wireless-Access-Protocol (WAP) verwendet.

In einer Adreßwertdetektionseinrichtung ADR-DET der Kommunikationsanlage PBX wird anhand der Selektionseingabe SI eine Adreßinformation AI ermittelt. Von einer Steuerungseinrichtung CTL der Kommunikationsanlage PBX wird eine Verbindung für paketorientierte Datenübermittlung zu einem Server WAP-SRV aufgebaut, der durch die Adreßinformation AI bezeichnet ist. Außerdem wird von der Steuerungseinrichtung CTL eine Anforderung RQ zur Übermittlung der Text- bzw. Grafikinformation TGI, die durch die Selektionseingabe SI bezeichnet ist, an den Server WAP-SRV gesendet. Die Kommunikationsanlage PBX weist eine nicht näher dargestellte Schnittstelle zu einem Netz WEB für paketorientierte Datenübermittlung auf. Ein Beispiel für ein solches Netz WEB ist das Internet oder ein unternehmensinternes Intranet. Für ein Endgerät TE1, TE2, TE3 angeforderte Text- bzw. Grafikinformationen sind somit von einer Vielzahl von Servern S1 bis Sn abrufbar.

Der Server WAP-SRV sendet entsprechend der Anforderung RQ die Text- bzw. Grafikinformation TGI über das Netz WEB an die Kommunikationsanlage PBX. Die vom Server WAP-SRV empfangene Text- bzw. Grafikinformation TGI wird in einer Umsetzereinrichtung CNV der Kommunikationsanlage PBX auf ein kommunikationsanlagenindividuelles Datenübertragungsprotokoll umgewandelt. Die umgewandelte Text- bzw. Grafikinformation TGC wird über eine Sendeeinrichtung PTX der Kommunikationsanlage PBX an eine Empfangseinrichtung TRX des Endgerätes TE1 übermittelt, für das die Text- bzw. Grafikinformation TGI angefordert wurde.

An einer Benutzerschnittstelleneinrichtung UI des Endgerätes TE1 werden Selektionsinformationen visualisiert, die abrufbare Text- bzw. Grafikinformationen TGI bezeichnen. Der Benutzerschnittstelleneinrichtung UI sind eine Anzeigeeinrichtung DIS und eine Tastatur KB zugeordnet. Für die benutzereingegebene Anforderung können somit am Endgerät TE1 visualisierte Selektionsinformationen verfügbar gemacht werden. Die vom Benutzer eingegebene Anforderung kann alternativ durch Betätigung einer am Endgerät TE1 vorprogrammierten Wahltaste K1 bis K9 erfolgen.

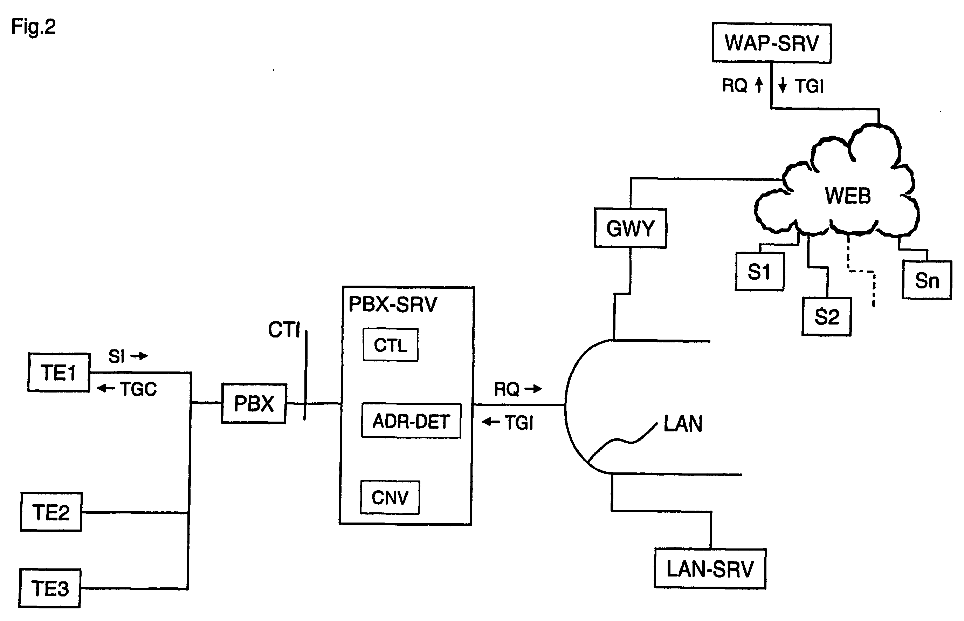

Das in Figur 2 dargestellte Kommunikationssystem weist zusätzlich eine separate Programmsteuerungseinrichtung PBX-SRV auf, die der Kommunikationsanlage PBX zugeordnet ist. Die Programmsteuerungseinrichtung PBX-SRV ist beispielsweise über eine CTI-Schnittstelle CTI (Computer Telephone Integration) an die Kommunikationsanlage PBX gekoppelt. Der Datenaustausch zwischen der Kommunikationsanlage PBX und der Programmsteuerungseinrichtung PBX-SRV erfolgt entsprechend dem CSTA-Phase-III-Protocol. Die Steuerungseinheit CTL ist nun nicht der Kommunikationsanlage PBX zugeordnet, sondern der Programmsteuerungseinrichtung PBX-SRV.

Die Programmsteuerungseinrichtung PBX-SRV weist eine nicht näher dargestellte Schnittstelle zu einem lokalen Netzwerk LAN auf. An das lokale Netzwerk ist ein weiterer Server LAN-SRV angeschlossen, an dem entsprechend dem Wireless-Access-Protocol (WAP) formatierte Text- bzw. Grafikinformationen abrufbar sind. Bei dem in Figur 2 dargestellten Kommunikationssystem ist das lokale Netzwerk LAN über ein Gateway GWY mit dem Netz WEB gekoppelt. Damit steht eine Verbindung für paketorientierte Datenübermittlung zwischen der Programmsteuerungseinrichtung PBX-SRV und dem Server WAP-SRV zur Verfügung. Die Programmsteuerungseinrichtung PBX-SRV kann also Aufgaben eines Proxy-Servers wahrnehmen, der stellvertretend für die an die Kommunikationsanlage PBX angeschlossenen Endgeräte TE1, TE2, TE3 als virtueller Dienstanforderer fungiert.

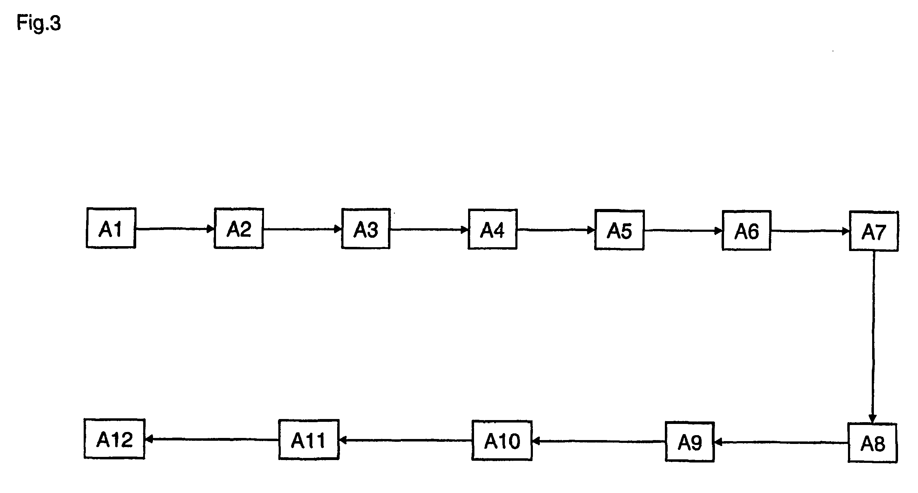

Bei dem in Figur 3 dargestellten Ablaufdiagramm werden zunächst Funktionen an einem Endgerät TE1, TE2, TE3 zur Anforderung von entsprechend dem Wireless-Access-Protocol (WAP) formatierten Text- bzw. Grafikinformationen TGI aktiviert (Schritt A1). Danach werden durch die Kommunikationsanlage PBX bzw. die Programmsteuerungseinrichtung PBX-SRV Selektionsinformationen für die benutzereingegebene Anforderung an das jeweilige Endgerät TE1, TE2, TE3 übermittelt (Schritt A2). Auf Basis der am Endgerät TE1, TE2, TE3 visualisierten Selektionsinformationen erfolgt eine Auswahl einer gewünschten Text- bzw. Grafikinformation TGI (Schritt A3). Nachfolgend wird eine die ausgewählte Text- bzw. Grafikinformation TGI bezeichnende Selektionseingabe SI an die Kommunikationsanlage PBX bzw. die Programmsteuerungseinrichtung PBX-SRV übermittelt (Schritt A4).

Anhand der Selektionseingabe SI wird dort eine Adreßinformation AI ermittelt (Schritt A5). Die Kommunikationsanlage PBX bzw. die Programmsteuerungseinrichtung PBX-SRV baut danach eine Verbindung zu dem durch die Adreßinformation AI bezeichneten Server WAP-SRV auf (Schritt A6) und übermittelt an diesen eine Anforderung RQ zur Übermittlung der ausgewählten Text- bzw. Grafikinformation TGI (Schritt A7). Nach einer Analyse der Anforderung RQ durch den Server WAP-SRV (Schritt A8) wird die angeforderte Text- bzw. Grafikinformation TGI an die Kommunikationsanlage PBX bzw. die Programmsteuerungseinrichtung PBX-SRV übermittelt (Schritt A9). Dort wird die vom Server WAP-SRV empfangene Text- bzw. Grafikinformation TGI in der Umsetzereinrichtung CNV auf das kommunikationsanlagenindividuelle Datenübertragungsprotokoll umgewandelt (Schritt A10). Die umgewandelte Text- bzw. Grafikinformationen TGC wird an das Endgerät TE1, TE2, TE3 übermittelt, für das die Text- bzw. Grafikinformation TGI angefordert wurde (Schritt A11), und dort an der Anzeigeeinrichtung DIS dargestellt (Schritt A12).

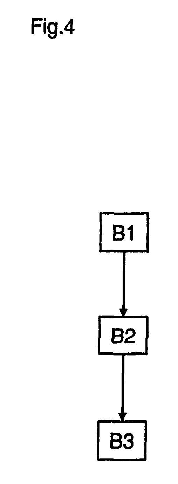

An zahlreichen Endgeräten besteht jedoch nicht die Möglichkeit, Tabellen oder Schwarz/Weiß-Grafiken darzustellen. In diesem Fall wird eine entsprechend dem Wireless-Access-Protocol (WAP) formatierte Grafikinformation in der Umsetzereinrichtung CNV auf ein Datenformat umgewandelt, das durch das jeweilige Endgerät TE1, TE2, TE3 darstellbar ist. Das Ablaufdiagramm in Figur 4 verdeutlicht die Schritte eines Verfahrens für eine solche Umwandlung. Zunächst sind aus der entsprechend dem Wireless-Access-Protocol (WAP) formatierten Text- bzw. Grafikinformation diejenigen Bestandteile herauszufiltern, die durch das jeweilige Endgerät darstellbar sind (Schritt B1). Nicht darstellbare Bestandteile werden durch am Endgerät darstellbare Austauschelemente ersetzt (Schritt B2). Nach der Ersetzung wird die Text- bzw. Grafikinformation beispielsweise durch eine Veränderung von Zeilenumbrüchen an die Abmessungen der Anzeigeeinrichtung des jeweiligen Endgerätes angepaßt (Schritt B3).

Ein Navigieren innerhalb der umgewandelten Text- bzw. Grafikinformation kann auf einfache Weise beispielsweise mittels am Endgerät verfügbarer Ziffern- oder Sondertasten erfolgen. Auf diese Weise wird ein Blättern durch die Text- bzw. Grafikinformation innerhalb des Anzeigebereiches der Anzeigeeinrichtung oder eine direkte Anwahl eines Menüpunktes in der Text- bzw. Grafikinformation ermöglicht.

Durch Telefonbucheinträge mit zumindest Angaben über Name und Rufnummer von Teilnehmern als Bestandteile von Text- bzw. Grafikinformationen wird beispielsweise in vorteilhafter Ausgestaltung des erfindungsgemäßen Verfahrens ein systemeinheitlicher Dienst innerhalb eines Kommunikationssystems verfügbar gemacht. Ein weiterer Dienst, der auf dem erfindungsgemäße Verfahren basiert, ist das Versenden und Empfangen von Kurznachrichten (SMS - Short Message Services) an Endgeräten, die an eine Kommunikationsanlage angeschlossenen sind. Voraussetzung hierfür ist, daß die jeweilige Kommunikationsanlage eine Zugriffsmöglichkeit auf Mobilfunknetze bietet.

Die Anwendung des Erfindung ist nicht allein auf die hier beschriebenen Ausführungsbeispiele beschränkt.

## Patentansprüche

1. Verfahren zum Betrieb eines Kommunikationssystems mit mindestens einer Kommunikationsanlage und mindestens einem an die Kommunikationsanlage angeschlossenen Endgerät, bei dem
- eine dem Endgerät (TE1, TE2, TE3) zugeordnete Sendeeinrichtung (TTX) bei einer benutzereingegebehen Anforderung einer entsprechend einem Protokoll für drahtlose Text- und/oder Grafikinformationsübertragung formatierten Text- und/oder Grafikinformation (TGI) eine die angeforderte Text- und/oder Grafikinformation (TGI) bezeichnende Selektionseingabe (SI) an eine der Kommunikationsanlage (PBX) zugeordnete Empfangseinrichtung (PRX) übermittelt,
- anhand der Selektionseingabe (SI) eine Adreßinformation (AI) ermittelt wird,
- eine der Kommunikationsanlage (PBX) zugeordnete Steuerungseinrichtung (CTL) eine Verbindung für eine paketorientierte Datenübermittlung zu einem durch die Adreßinformation (AI) bezeichneten Server (WAP-SRV) aufbaut und eine Anforderung (RQ) zur Übermittlung der durch die Selektionseingabe (SI) bezeichneten Text- und/oder Grafikinformation (TGI) an den Server (WAP-SRV) sendet,
- eine von dem Server (WAP-SRV) empfangene Text- und/oder Grafikinformation (TGI) in einer der Kommunikationsanlage (PBX) zugeordneten Umsetzereinrichtung (CNV) auf ein kommunikationsanlagenindividuelles Datenübertragungsprotokoll umgewandelt und an eine Empfangseinrichtung (TRX) übermittelt wird, die dem Endgerät (TE1, TE2, TE3) zugeordnet ist, für das die Text- und/oder Grafikinformation (TGI) angefordert wurde.

2. Verfahren nach Anspruch 1,
**dadurch gekennzeichnet, daß** abrufbare Text- und/oder Grafikinformationen (TGI) bezeichnende Selektionsinformationen an einer Benutzerschnittstelleneinrichtung (UI) des Endgerätes (TE1, TE2, TE3) visualisiert werden.

3. Verfahren nach Anspruch 2,
**dadurch gekennzeichnet, daß** für die benutzereingegebene Anforderung am Endgerät (TE1, TE2, TE3) visualisierte Selektionsinformationen verfügbar gemacht werden.

4. Verfahren nach einem der Ansprüche 1 bis 3,
**dadurch gekennzeichnet, daß** die benutzereingegebene Anforderung durch Betätigung einer am Endgerät vorprogrammierten Wahltaste (K1-K9) erfolgt.

5. Verfahren nach einem der Ansprüche 1 bis 4,
**dadurch gekennzeichnet, daß** eine vom Server (WAP-SRV) empfangene Grafikinformation in der Umsetzereinrichtung (CNV) auf ein Datenformat umgewandelt wird, das durch das Endgerät (TE1, TE2, TE3) darstellbar ist, für das die Grafikinformation angefordert wurde.

6. Verfahren nach einem der Ansprüche 1 bis 5,
**dadurch gekennzeichnet, daß** Telefonbucheinträge, die zumindest Angaben über Namen und Rufnummer eines Teilnehmers aufweisen, Bestandteile der Text- und/oder Grafikinformation (TGI) bilden.

7. Kommunikationsanlage mit
- einem Koppelnetz (SN),
- einer vermittlungstechnischen Steuerungseinheit (CP),
- mindestens einer peripheren Anschlußeinrichtung (LTU),
- einer Empfangseinrichtung (PRX) für eine von einem über die periphere Anschlußeinrichtung (LTU) mit der Kommunikationsanlage (PBX) verbundenen Endgerät (TE1, TE2, TE3) empfangene Selektionseingabe (SI), die eine für das Endgerät (TE1, TE2, TE3) angeforderte, entsprechend einem Protokoll für drahtlose Text- und/oder Grafikinformationsübertragung formatierte Text- und/oder Grafikinformation (TGI) bezeichnet,
- Mitteln (ADR-DET) zur Bestimmung einer Adreßinformation (AI) anhand der von dem Endgerät (TE1, TE2, TE3) übermittelten Selektionseingabe (TI),
- einer Steuerungseinrichtung (CTL) für einen Aufbau einer Verbindung für eine paketorientierte Datenübermittlung zu einem durch die Adreßinformation (AI) bezeichneten Server (WAP-SRV) und für ein Senden einer Anforderung (RQ) zur Übermittlung der durch die Selektionseingabe (SI) bezeichneten Text- und/oder Grafikinformation (TGI) an den Server (WAP-SRV),
- einer Umsetzereinrichtung (CNV) für eine Umwandlung einer von dem Server (WAP-SRV) empfangenen Text- und/oder Grafikinformation (TGI) auf ein kommunikationsanlagenindividuelles Datenübertragungsprotokoll und
- Mitteln (PTX) zur Übermittlung einer durch die Umsetzereinrichtung (CNV) umgewandelten Text- und/oder Grafikinformation (TGC) an eine Empfangseinrichtung (TRX), die dem Endgerät (TE1, TE2, TE3) zugeordnet ist, für das die Text- und/oder Grafikinformation (TGI) angefordert wurde.

## Claims

1. Method for operation of a communications system with at least one communications installation and at least one terminal connected to the communications installation, in which
- a transmitter (TTX) assigned to the terminal (TE1, TE2, TE3) for a user-entered request for text and/or graphics information (TGI) formatted in accordance with a protocol for wireless text and/or graphics information transmission transfers to a receiver (PRX) assigned to the communications installation (PBX) a selection entry (SI) designating the requested text and/or graphics information (TGI),
- address information (AI) is determined with reference to the selection information (SI),
- a controller (CTL) assigned to the communication unit (PBX) establishes a connection for a packet-oriented data transmission to a server (WAP-SRV) designated by the address information (AI) and sends a request (RQ) for transmission of the text and/or graphics information (TGI) identified by the selection entry (SI) to the server (WAP-SRV),
- text and/or graphics information (TGI) received by the server (WAP-SRV) is converted in a converter (CNV) assigned to the communications installation (PBX) to a data transmission protocol for the individual communications installation and transferred to a receiver (PRX), which is assigned to the terminal (TE1, TE2, TE3) for which the text and/or graphics information (TGI) was requested.

2. Method in accordance with claim 1,
**characterized in that** selection information identifying retrievable text and/or graphics information (TGI) is visualized at a user interface (UI) of the terminal (TE1, TE2, TE3).

3. Method in accordance with claim 2,
**characterized in that**, for the user-entered request at the terminal (TE1, TE2, TE3), visualized selection information is made available.

4. Method in accordance with one of the claims 1 to 3,
**characterized in that** the user request is entered by pressing a preprogrammed selection key (K1-K9) on the terminal.

5. Method in accordance with one of the claims 1 to 4,
**characterized in that** graphics information received by the server (WAP-SRV) is converted in the converter (CNV) to a data format which can be displayed by the terminal (TE1, TE2, TE3) for which the graphics information was requested.

6. Method in accordance with one of the claims 1 to 5,
**characterized in that** telephone book entries which at least feature information about name and telephone number of a subscriber are components of the text and/or graphics information (TGI).

7. Communications installation with
- a switching network (SN),
- a call processing control unit (CP),
- at least one peripheral line/trunk unit (LTU),
- a receiver (PRX) for a selection entry (SI) received via a terminal (TE1, TE2, TE3) connected via a peripheral line/trunk unit (LTU) to the communications installation (PBX), which identifies text and graphics information requested for the terminal (TE1, TE2, TE3), formatted in accordance with a protocol for transmission of wireless text and/or graphics information (TGI),
- means (ADR-DET) for determining the address information (AI) on the basis of the selection entry (TI) transferred by the terminal (TE1, TE2, TE3).
- a controller (CTL) for establishing a connection for packet-oriented data transmission to a server (WAP-SRV) identified by address information (AI) and for sending a request (RQ) for transfer to the server (WAP-SRV) of the text and/or graphics information (TGI) identified by the selection entry (SI),
- a converter (CNV) for conversion of text and/or graphics information (TGI) received by the server (WAP-SRV) to a data transmission protocol individual to the communications installation and
- means (PTX) for transfer of text and/or graphics information (TGC) converted by the converter (CNV) to a receiver (TRX) which is assigned to the terminal (TE1, TE2, TE3) for which the text and/or graphics information (TGI) was requested.

## Revendications

1. Procédé pour faire fonctionner un système de communication comprenant au moins une installation de communication et au moins un terminal connecté à l'installation de communication, dans lequel
- un dispositif d'émission (TTX) associé au terminal (TE1, TE2, TE3) transmet à un dispositif de réception (PRX) associé à l'installation de communication (PBX), lorsque survient une demande, entrée par un utilisateur, d'une information textuelle et/ou graphique (TGI) formatée conformément à un protocole pour la transmission sans fil d'informations textuelles et/ou graphiques, une entrée de sélection (SI) désignant l'information textuelle et/ou graphique (TGI) demandée,
- une information d'adresse (AI) est déterminée sur la base de l'entrée de sélection (SI),
- un dispositif de commande (CTL) associé à l'installation de communication (PBX) établit une connexion pour une transmission de données orientée paquets vers un serveur (WAP-SRV) désigné par l'information d'adresse (AI) et envoie au serveur (WAP-SRV) une demande (RQ) de transmission de l'information textuelle et/ou graphique (TGI) désignée par l'entrée de sélection (SI),
- une information textuelle et/ou graphique (TGI) reçue du serveur (WAP-SRV) est convertie, dans un dispositif de conversion (CNV) associé à l'installation de communication (PBX), pour être conforme à un protocole de transmission de données individuel pour l'installation de communication et est transmise à un dispositif de réception (TRX) associé au terminal (TE1, TE2, TE3) pour lequel l'information textuelle et/ou graphique (TGI) a été demandée.

2. Procédé selon la revendication 1,
**caractérisé en ce que** des informations de sélection désignant des informations textuelles et/ou graphiques (TGI) pouvant être appelées sont visualisées au niveau d'un dispositif d'interface utilisateur (UI) du terminal (TE1, TE2, TE3).

3. Procédé selon la revendication 2,
**caractérisé en ce que** des informations de sélection visualisées au niveau du terminal (TE1, TE2, TE3) pour la demande entrée par un utilisateur sont mises à disposition.

4. Procédé selon l'une des revendications 1 à 3,
**caractérisé en ce que** la demande entrée par un utilisateur est effectuée par actionnement une touche de sélection (K1-K9) préprogrammée au niveau du terminal.

5. Procédé selon l'une des revendications 1 à 4,
**caractérisé en ce qu'**une information graphique reçue du serveur (WAP-SRV) est convertie, dans le dispositif de conversion (CNV), dans un format de données pouvant être représenté par le terminal (TE1, TE2, TE3) pour lequel l'information graphique a été demandée.

6. Procédé selon l'une des revendications 1 à 5,
**caractérisé en ce que** des entrées d'annuaire comprenant au moins des données sur le nom et le numéro d'appel d'un abonné font partie de l'information textuelle et/ou graphique (TGI).

7. Installation de communication comprenant
- un réseau de couplage (SN),
- une unité de commande (CP) dédiée à la commutation,
- au moins un dispositif de connexion périphérique (LTU),
- un dispositif de réception (PRX) pour une entrée de sélection (SI) reçue d'un terminal (TE1, TE2, TE3) connecté à l'installation de communication (PBX) par le biais du dispositif de connexion périphérique (LTU), laquelle entrée de sélection (SI) désigne une information textuelle et/ou graphique (TGI) formatée conformément à un protocole pour la transmission sans fil d'informations textuelles et/ou graphiques et demandée pour le terminal (TE1, TE2, TE3),
- des moyens (ADR-DET) pour déterminer une information d'adresse (AI) sur la base de l'entrée de sélection (SI) transmise par le terminal (TE1, TE2, TE3),
- un dispositif de commande (CTL) pour établir une connexion pour une transmission de données orientée paquets vers un serveur (WAP-SRV) désigné par l'information d'adresse (AI) et pour envoyer au serveur (WAP-SRV) une demande (RQ) de transmission de l'information textuelle et/ou graphique (TGI) désignée par l'entrée de sélection (SI),
- un dispositif de conversion (CNV) pour convertir une information textuelle et/ou graphique (TGI) reçue du serveur (WAP-SRV) pour être conforme à un protocole de transmission de données individuel pour l'installation de communication et
- des moyens (PTX) pour transmettre une information textuelle et/ou graphique (TGC) convertie par le dispositif de conversion (CNV) à un dispositif de réception (TRX) associé au terminal (TE1, TE2, TE3) pour lequel l'information textuelle et/ou graphique (TGI) a été demandée.
